# EUROPEAN PATENT APPLICATION

(11) **EP 1 042 959 A1**
(43) Date of publication of application: **11.10.2000**
(21) Application number: 00830135.0
(22) Date of filing: 24.02.2000
(51) Int. Cl.: A22C 29/00, A23L 1/325, A22C 25/16

(54) **Product suitable for the alimentary upgrading of squid fins as well as method and apparatus for obtaining said product**

(30) Priority: 09.04.1999 IT PR990032
(71) Applicant: Omar S.r.l., 43100 Parma (IT)
(72) Inventor: Baiocchi, Alinovi Mario, 43100 Parma (IT)
(74) Representative: Gotra, Stefano

(57) **Abstract**

The invention relates to the sector of methods and associated apparatus intended for the processing of squids. The squid fins (2) are subjected to the action of a plurality of blades (11), each of which is spaced from the adjacent blades by means of a spacer (12). The plurality of blades (11) and the associated spacers (12) form a blade-carrying roller (10).

## Description

The present invention relates to a product suitable for the alimentary upgrading of squid fins as well as a method and apparatus for obtaining said product.

A squid is essentially composed of three parts: the head characterized by a cluster of numerous tentacles, the body containing the various vital organs as well as the known ink sac and two appendages - called fins - which are positioned symmetrically with respect to the said body, in the front portion thereof.

At present, said appendages are removed integrally from the squid body by means of suitably shaped blades and destined for human consumption only in certain cases where they are considered to be of limited value.

This is due to the fact that the said fins, being made of membranous material of not negligible thickness, remain very hard even after prolonged cooking.

All this results in the abovementioned fins forming a part of the squids which is regarded - and therefore economically valued - as being little more than a waste product.

The object of the present invention is to eliminate the abovementioned drawbacks by providing both an end product and an associated method and an associated apparatus designed to achieve, specifically, upgrading of said fins in the food sector.

As regards the product according to the present invention, it is characterized in that it is in the form of thin strips each having a width variable from 1.5 to 3.5 mm and a length corresponding to that of the fin portion from which they are obtained.

The method for obtaining the abovementioned product has the characteristic feature that the squid fins, which have been detached beforehand using a known technique, are forced to pass underneath a plurality of blades which are all identical and have a mutual distance which is always identical.

The apparatus for performing the abovementioned method is characterized in that it comprises:
- a conveyor device on which the squid fins are arranged;
- a pressure roller, the axis of rotation of which is positioned perpendicularly with respect to the direction of feeding of the fins on the conveyor device, at a level lower than the surface supporting the said fins on the said conveyor device and in a forward position with respect to the end of the said conveyor device in the direction of forward movement thereof;
- a blade-carrying roller positioned above and parallel to the pressure roller;
- a scraper roller positioned below the blade-carrying roller, parallel thereto and substantially at the same height as the pressure roller.

These and other characteristic features will emerge more clearly from the following description of a preferred embodiment illustrated, purely by way of a non-limiting example, in the accompanying plates of drawings in which:

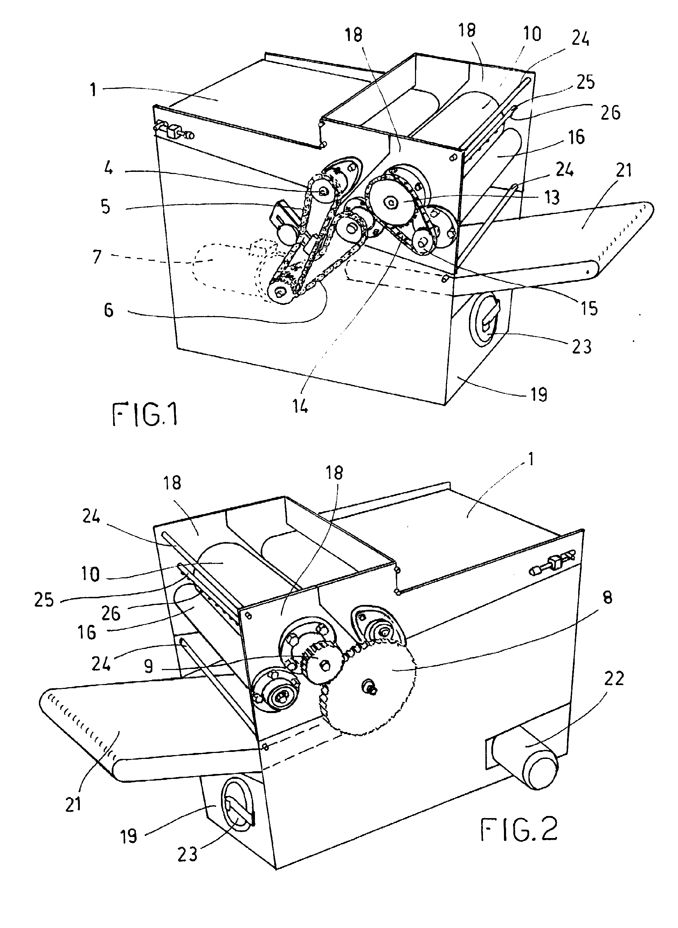

- Figure 1 shows an overall axonometric view of the right-hand side of the apparatus in the direction of feeding of the product;
- Figure 2 shows the apparatus as above, but from its left-hand side;

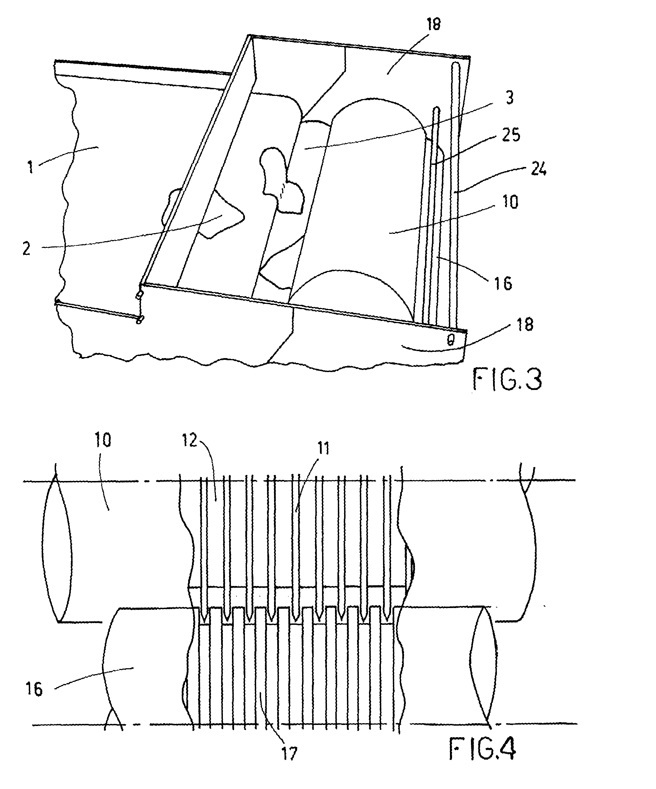

- Figure 3 shows a plan view of the fin cutting zone;
- Figure 4 shows, on a larger scale, a portion where there is mutual contact between blade-carrying roller and scraper roller.

As regards the apparatus according to the present invention and with reference to the figures, 1 denotes a conveyor belt designed to feed the squid fins 2; 3 denotes a pressure roller, the axis of rotation of which is positioned below the plane passing through the axes of rotation of the said conveyor belt and is parallel thereto; the pressure roller 3, moreover, is located in a forward position with respect to the end of the conveyor belt 1 in the direction of forward movement thereof.

Both the conveyor belt 1 and the pressure roller 3 are made of material suitable for alimentary use.

The drive roller 4 of the conveyor belt 1 and the pressure roller 3 receive the movement, via two separate chains 5 and 6, respectively, and corresponding toothed pinions, from an electric motor 7 equipped with a suitable speed reducer, not shown.

The said two chains are positioned on the outside of the right-hand side of the apparatus, with reference to the direction of feeding of the fins 2 on the conveyor belt 1.

A first toothed wheel 8 meshing with a second toothed wheel 9 is keyed, on the left-hand side of the apparatus, onto the end of the shaft of the pressure roller 3, said second toothed wheel 9 being keyed onto the end of the spindle of a blade-carrying roller 10.

The said blade-carrying roller is composed of a plurality of circular blades 11 spaced from one another, at a distance varying from 1.5 to 3.5 mm depending on the desired cutting width, by the arrangement of suitable spacers 12 which also have a circular extension; said spacers have an external diameter which is smaller than that of the blades 11. The blade-carrying roller 10 and pressure roller 3 are positioned relative to each other in such a way that the former is located at a higher level.

The pitch diameter of the first toothed wheel 8 is much greater than that of the second toothed wheel 9, thus resulting in a peripheral speed of the blade-carrying roller 10 which is markedly greater than that of the pressure roller 3.

The right-hand end of the central spindle of the blade-carrying roller 10 has, keyed onto it, a first toothed pinion 13 designed to transmit the rotary movement, via a chain 14, to a second toothed pinion 15 keyed onto the end of a scraper roller 16.

Said roller, which has an axis of rotation parallel to that of the blade-carrying roller 10 is positioned below the latter; its external surface also has a plurality of reliefs 17 which have a width of less than 1.5/3.5 mm and are spaced from one another at a distance corresponding to the interval between the blades 11; said reliefs 17 also project by an amount which is substantially smaller than the amount by which the plurality of the said blades project from the associated spacers 12.

The external surface of the scraper roller 16 is made of a material suitable for alimentary use.

The blade-carrying roller 10, the scraper roller 16 and the pressure roller 3 are joined, at their ends, by two plates 18 which are identical to each other and fixed to the apparatus so that the assembly consisting of the abovementioned rollers may be easily removed so as to carry out both cleaning and replacement or sharpening of the blades 11. The two said plates 18 are connected together by two holding elements 24 which have a substantially rectilinear extension.

A pipe 25, designed to allow the flow of washing water and having a plurality of nozzles 26 all directed towards the blade-carrying roller 10 and the scraper roller 16, extends between the two plates 18. The said pipe 25 is situated in a substantially intermediate position between the two holding elements 24.

A second conveyor belt 21 is positioned underneath the zone of the apparatus occupied by the blade-carrying roller 10 and by the scraper roller 16 and is designed to receive the plurality of strips 20 into which the squid fins 2 are cut by the plurality of blades 11; said second conveyor belt has an inclination directed substantially upwards on the exit side of the apparatus. This second conveyor belt has a perforated surface suitable for draining the water emitted from the nozzles 26 of the pipe 25.

A tray 19 is positioned underneath the second conveyor belt 21 and is designed to receive the impurities and the water resulting from the said conveyor belt 21; the said water is recirculated by a pump 22.

A side wall of the tray 19 has an opening provided with a hatch 23 having a suitable operating system.

The operating principle of the apparatus, as well as the method, necessary for obtaining the product according to the present invention, will now be described with reference to the numbers shown in the figures.

The fins 2 of the squids, after being deposited on the continuously moving conveyor belt 1, reach the end of the said belt and fall onto the pressure roller 3; as a result of rotation of the latter the said fins are pushed towards the plurality of blades 11 of the blade-carrying roller 10.

The counter-rotating movement of the latter with respect to the pressure roller 3, together with its far higher speed of rotation compared to that of the said pressure roller, forces the fins to pass through the small gap present between the two said rollers, causing the desired cutting into the form of thin strips 20.

Once cutting has been performed, the said strips are detached from the plurality of blades 11 by the action of the reliefs 17 present over the whole circumference of the scraper roller 16 and penetrating inside the spaces existing between each of the said blades; this fact, in addition to ensuring separation of the strips 20, also promotes removal of minute particles of product and therefore ensures continuous cleaning of the individual blades 11 during the working process.

Separation of the strips 20 is also helped by the jets of water emitted from the nozzles 26 of the pipe 25; the action of these jets of water is also particularly important for ensuring separation of the film which naturally covers the fins and which has a marked tendency to adhere to the blades 11 and to the reliefs 17 of the respective rollers.

The mass consisting of the strips 20 and all the impurities then falls onto the second conveyor belt 21; while the strips are retained on the surface of the said conveyor belt and conveyed out of the apparatus, all the impurities, together with the washing water, pass through the apertures in the said second conveyor belt, falling into the underlying tray 19.

While the impurities are deposited by means of gravity onto the bottom of the said tray 19, the water present therein is recirculated inside the pipe 25 by means of the action of the pump 22.

The waste matter which is deposited on the bottom of the tray 19 is then periodically removed manually, making use of the presence of the hatch 23.

The product obtained by means of the apparatus and in accordance with the method described above is in the form of thin strips which have a variable length depending on the fin portion from which they are obtained and a width of the order of 1.5/3.5 mm. It is precisely this characteristic which ensures alimentary upgrading of the squid fins 6 since, being naturally composed of membranous material, they are difficult to digest; however, once they have been cut into the strips as described above, they can be prepared much more easily using the wide range of cooking methods: for example, by means of frying where the boiling oil is able to exert its action on a product with substantially parallel surfaces situated at a distance from each other of not more than 3.5 mm.

During the course of the description of the preferred embodiment specific reference has been made to a conveyor belt 1 moved by an electric motor provided with a suitable speed reducer, as a means for feeding the squid fins towards the blade-carrying roller; it is obvious, however, that this feeding action may be advantageously performed also by a different means such as, for example, a vibrating belt provided with suitable motorised elements designed to impart the necessary vibrations thereto.

Likewise, in the description specific reference has been made to the pipe 25 extending between the two plates 18 as a separate element, but it is obvious that this pipe could advantageously coincide with one of the two holding elements 24.

## Claims

1. Product suitable for the alimentary upgrading of squid fins, characterized in that it is in the form of thin strips (20) each having a width varying between 1.5 and 3.5 mm and a variable length depending on the fin portion (2) from which they are obtained.

2. Method for obtaining the product according to Claim 1, characterized in that the fins (2), which have been detached beforehand using a known technique, are forced to pass underneath a plurality of blades (11) which are identical to each other and have a mutual distance which is always identical.

3. Method according to Claim 2, characterized in that cutting of the strips (20) is performed during only one passing movement of each fin (2) underneath the plurality of blades (11).

4. Apparatus for performing the method according to Claim 2, characterized in that it comprises:
- a conveyor device (1) on which the squid fins (2) are deposited;
- a pressure roller (3), the axis of rotation of which is positioned perpendicularly with respect to the direction of feeding of the fins (2) on the conveyor device (1), at a level lower than the surface supporting the said fins on the said conveyor device and in a forward position with respect to the end of the said conveyor device in the direction of forward movement thereof;
- a blade-carrying roller (10) positioned above and parallel to the pressure roller (3);
- a scraper roller (16) positioned below the blade-carrying roller (10), parallel thereto and substantially at the same height as the pressure roller (3).

5. Apparatus according to Claim 4, characterized in that the conveyor device (1) and the pressure roller (3) both rotate in the same direction.

6. Apparatus according to Claim 4, characterized in that the pressure roller (3) and the blade-carrying roller (10) are relatively positioned parallel to each other so that the gap between them may be sufficiently large to prevent mutual contact and therefore being considerably smaller than the thickness of the fins (2).

7. Apparatus according to Claims 4 and 6, characterized in that the blade-carrying roller (10) rotates in the opposite direction to the pressure roller (3).

8. Apparatus according to Claims 4 and 6, characterized in that the peripheral speed of rotation of the blade-carrying roller (10) is much greater than that of the pressure roller (3), this characteristic feature being such as to produce a forcing action upon insertion of the fins (2) between the two said rollers.

9. Apparatus according to Claim 4, characterized in that each blade (11) is assembled on the blade-carrying roller (10) so that it is separated from the adjacent blades by means of a spacer (12) having a thickness less than the distance between the tips of the said blades; each of the said spacers has an external diameter smaller than that of the blades (11).

10. Apparatus according to Claims 4 and 9, characterized in that the scraper roller (16) has an external circumference provided with a plurality of reliefs (17) which have a width smaller than that of the spacers (12) and are spaced from one another at a distance corresponding to the interval between the blades (11); the height of the said reliefs being less than the amount by which the plurality of blades (11) project the corresponding spacers (12); all these characteristics of the scraper roller (16) being designed to favour penetration of the associated reliefs (17) inside the plurality of blades (11) so as to ensure continuous cleaning thereof during the working process.

11. Apparatus according to Claims 4 and 9, characterized in that the scraper roller (16) is positioned below the blade-carrying roller (10) and in front thereof in the direction of feeding of the product; the peripheral speed of rotation of the scraper roller (16) is slightly greater than that of the blade-carrying roller (10).

12. Apparatus according to Claims 4 and 11, characterized in that the blade-carrying roller (10) and the scraper roller (16) rotate in opposite directions.

13. Apparatus according to Claim 4, characterized in that the scraper roller (16) and the blade-carrying roller (10) are joined to the said apparatus by means of two plates (18) which are identical to each other and arranged facing and are connected together by two bars (24); said two plates may be disassembled from the apparatus body so as to allow both interchanging and disassembly of the plurality of blades (11) for thorough cleaning or sharpening thereof; the said disassembly being favoured by the presence of two holding elements (24).

14. Apparatus according to Claim 13, characterized in that a pipe (25) is positioned between the two plates (18), said pipe being designed to allow the flow of washing water and being provided with a plurality of nozzles (26) all directed towards the blade-carrying roller (10) and the scraper roller (16).

15. Apparatus according to Claim 14, characterized in that a pump (22) allows the recirculation of the water from a tray (19), which is positioned inside the apparatus below the zone thereof in which cutting of the squid fins (2) is performed, to the pipe (25).
